# EUROPEAN PATENT SPECIFICATION

(11) **EP 3 467 915 B1**
(45) Date of publication and mention of the grant of the patent: **17.05.2023**
(21) Application number: 17805578.6
(22) Date of filing: 27.04.2017
(51) Int. Cl.: H01M 4/525, H01M 10/0525, C01G 51/00, C01G 23/00, C01G 33/00, C01G 41/00

(54) **HIGH-RATE LITHIUM COBALTATE POSITIVE ELECTRODE MATERIAL AND METHOD FOR PREPARATION THEREOF**
HOCHRATIGES POSITIVES LITHIUMKOBALTAT ELEKTRODENMATERIAL UND VERFAHREN ZU DESSEN HERSTELLUNG
MATÉRIAU D'ÉLECTRODE POSITIVE DE COBALTATE DE LITHIUM À TAUX ÉLEVÉ ET SON PROCÉDÉ DE PRÉPARATION

(30) Priority: 01.06.2016 CN 201610381625
(43) Date of publication of application: 10.04.2019
(73) Proprietor: BASF Shanshan Battery Materials Co., Ltd., Changsha, Hunan 410205 (CN)
(72) Inventor: DONG, Hong, Changsha Hunan 410205 (CN); HU, Xuyao, Changsha Hunan 410205 (CN); JIANG, Xiangkang, Changsha Hunan 410205 (CN); TAN, Xinxin, Changsha Hunan 410205 (CN); LI, Xu, Changsha Hunan 410205 (CN)
(74) Representative: Lapienis, Juozas
(86) International application number: PCT/CN2017/082231
(87) International publication number: WO 2017/206633

(56) References cited:
- WO-A1-2012/101501
- CN-A- 103 201 222
- CN-A- 104 282 880
- CN-A- 104 617 304
- CN-A- 105 870 441
- JP-A- 2006 260 887
- US-A1- 2009 081 554
- US-A1- 2016 014 215

## Description

### Technical Field

The present invention relates to a lithium cobaltate positive electrode material and the preparation method thereof, and more particular, it relates to a high-rate lithium cobaltate positive electrode material and the preparation method thereof.

### Background

Lithium-ion batteries are widely used in the field of mobile/IT equipment and energy storage due to their high power density, high energy and long life time. The lithium-ion battery industry develops rapidly. With the development of electronic products, higher requirements have been imposed on lithium-ion batteries, especially considering their light weight, high current discharge and safety performance.

The vigorous development that can be observed in the market of e-cigarettes, electronic models (car models, ship models, aircraft models, etc.), toys and wireless power tools requires lithium-ion batteries with shorter charging time, larger discharge currents and higher safety performance. Many small appliances are also required to be able to discharge at high rate. Therefore, it has become extremely important to develop a high-rate lithium-ion battery that can be used in the above-mentioned high-power electronic devices. Lithium cobaltate positive electrode material is widely used as a power source for e-cigarettes, electronic models, toys, wireless power tools, and small appliances due to its high specific capacity and compaction density, excellent cycle performance, especially high discharge capacity and high plateau at high-rate discharge.

A lithium-ion battery consists of a positive electrode, a negative electrode, an electrolyte, and a separator that prevents a short circuit between the plates of the positive electrode and the negative electrode. During the charging and discharging process of lithium batteries, Li⁺ move in and out of the positive electrode and negative electrode materials providing energy exchange. A lithium cobaltate positive electrode material stores lithium in the bulk phase; Li⁺ diffuse from the surface of the positive electrode material through the bulk phase of the positive electrode material into the positive electrode material. The long diffusion path of the lithium ions results in excessive internal resistance and thus the discharge capacity and the plateau are lower.

In addition, since the power density requirements of power type lithium batteries are continuously increased, the discharge rate is continuously increased from early 10C discharge to 20-30C discharge, and even to 50-60C discharge for some special demands. The charge-discharge rate of a lithium-ion battery is related to the positive electrode and negative electrode materials of the battery and the preparation process. It is difficult for the lithium cobaltate positive electrode materials prepared according to the prior art to satisfy the rate performance and cycle performance of the above-mentioned battery, especially to satisfy the rate performance and cycle performance at 50-60C discharge. Therefore, it is necessary to develop a high-rate lithium cobaltate positive electrode material which not only has a good capacity and plateau at high rate discharge, but also maintains excellent cycle performance to meet the needs of battery manufacturers.

JP2006260887 discloses a multichannel network formed by porous Li0.35La0.55TiO3.

### Summary of Invention

The technical problem to be solved by the present invention is to overcome the deficiencies and defects mentioned in the background above, and to provide a high-rate lithium cobaltate positive electrode material, as well as a corresponding preparation method which is fast, simple and can effectively improve the production rate performance.

In order to solve the above-mentioned technical problem, the technical solution proposed by the present invention is a high-rate lithium cobaltate positive electrode material which is produced in accordance with the method of claim 1 and which is composed of lithium cobaltate, wherein the lithium cobaltate positive electrode material contains a multi-channel network structure formed by a fast ionic conductor Li_{α}M'_{γ}O_{β}; the lithium cobaltate in form of primary particles is melted integrally with the fast ionic conductor Li_{α}M'_{γ}O_{β} to form secondary particles; and the lithium cobaltate is embedded in the above-mentioned multi-channel network structure formed by the fast ionic conductor Li_{α}M'_{γ}O_{β}, wherein the element M' in the Li_{α}M'_{γ}O_{β} is one or more of Ti, Nb, W, and 1≤α≤4, 1≤γ≤5, 2≤β≤12.

In the above-mentioned high-rate lithium cobaltate positive electrode material, preferably, the lithium cobaltate positive electrode material is further doped with an element M, and the lithium cobaltate positive electrode material is represented by a chemical formula of Li_{1+y}Co₁₋ₓMₓO₂•zLi_{α}M'_{γ}O_{β}, wherein 0≤x≤0.1, -0.01≤y≤0.01, 0.005≤z≤0.01, and the element M is one or more of Mg, Al, Si, Sc, Ni, Mn, Ga, and Ge.

The outstanding characteristics of the above-mentioned high-rate lithium cobaltate positive electrode material of the present invention is that the multi-channel network structure formed by the fast ionic conductor Li_{α}M'_{γ}O_{β} is separately formed into one phase and embedded in the lithium cobaltate phase to form a multidimensional channel two-phase structure with surface interior intercommunication.

As an overall technical concept, the present invention also provides a method for preparing high-rate lithium cobaltate positive electrode material as mentioned above, wherein the lithium cobaltate positive electrode material is prepared by the method steps as disclosed by claim 1.

According to the above-mentioned method for preparing high-rate lithium cobaltate positive electrode material, the cobalt oxide impregnated with a hydroxide of M' is prepared using the following steps in which:
an organic compound containing M' is dissolved in absolute ethyl alcohol, wherein it is dissolved and dispersed using a disperser; after the complete and uniform stirring (0.5-1 hour), the solution is added with a porous cobalt oxide (note that it is different from conventional cobalt oxide) and stirred for 0.5-1.5 hours; then, it is added with an ethanol aqueous solution, with the volume ratio of ethanol to water being 5-20, continuously stirred for 2-5 hours and subjected to suction filtration; the filter cake is dried in an oven (preferably, at 50 °C-70 °C) to obtain the cobalt oxide impregnated with a hydroxide of M'. In the preferred operation of the present invention, the hydroxide of M' is formed by hydrolysis of an organic compound containing M', wherein the hydroxide of M' can be uniformly embedded in the porous cobalt oxide by the hydrolysis to provide the premise and basis for obtaining a high-rate lithium cobaltate positive electrode material.

According to the above-mentioned method for preparing high-rate lithium cobaltate positive electrode material, more preferably, the organic compound containing M' is one or more of alkoxide of M', alkyl compound of M', carbonyl compound of M', and carboxyl compound of M'; the porous cobalt oxide is prepared by pre-sintering a precursor, the precursor being CoCO₃·aH₂O or CoC₂O₄·aH₂O, wherein 0≤a≤9. The average pore size distribution of the porous cobalt oxide is between 100 nm and 500 nm, and the porosity is between 0.5% and 5%.

According to the above-mentioned method for preparing high-rate lithium cobaltate positive electrode material, more preferably, the porous cobalt oxide is mainly prepared using the following steps in which:
a small amount of a precipitant solution is injected into a reaction kettle, wherein the pH is 6-14; under intense stirring and inert gas shielding, a cobalt salt solution, a complexing agent solution and the remaining precipitant solution are simultaneously injected into the reaction kettle using parallel flow method and react with each other; the pH is continuously controlled to be 6-14 during the stirring reaction, and the temperature of the reaction kettle is controlled to be between 0 °C and 85 °C during the reaction; after the cobalt salt solution is added completely, the mixture is aged and filtered to obtain a filter cake which is then dried (3-5 hours) in an oven (above 100 °C) to obtain a precursor; the precursor is placed into an air atmosphere furnace for pre-sintering, and it is sieved after the sintering to obtain the porous cobalt oxide.

According to the above-mentioned method for preparing high-rate lithium cobaltate positive electrode material, preferably, the cobalt salt solution is a solution formed by dissolving at least one of CoCl₂·bH₂O, CoSO₄·bH₂O, Co(NO₃)₂·bH₂O in water, wherein 0≤b≤6; the concentration of Co²⁺ in the cobalt salt solution is controlled to be 70-200 g/L; the complexing agent solution is ammonia water or aminocarboxylate solution; and the precipitant solution is carbonate solution, oxalic acid or oxalate solution. More preferably, when a carbonate solution is selected as the precipitant solution, the chemical formula of the precursor synthesized is CoCO₃·aH₂O, the carbonate solution being one or more of sodium carbonate, potassium carbonate, ammonium carbonate, ammonium bicarbonate solutions; when an oxalic acid or oxalate solution is selected as the precipitant solution, the chemical formula of the precursor synthesized is CoC₂O₄·aH₂O, the oxalate solution being one or more of sodium oxalate, potassium oxalate and ammonium oxalate solutions.

According to the above-mentioned method for preparing high-rate lithium cobaltate positive electrode material, preferably, the ageing time is 4-8 hours, and the heating mechanism of the pre-sintering is as follows: sintering at 300 °C-500 °C for 2-5 hours, and then sintering at 700 °C-800 °C for 2-5 hours.

According to the above-mentioned method for preparing high-rate lithium cobaltate positive electrode material, the lithium source is preferably one or more of lithium carbonate, lithium hydroxide or lithium oxide (Li₂CO₃, LiOH, Li₂O); an additive containing a doping element M is further mixed in the raw material for preparing the lithium cobaltate positive electrode material, wherein the additive containing a doping element M is at least one of oxide, hydroxide, carboxy oxide, carbonate or basic carbonate of M.

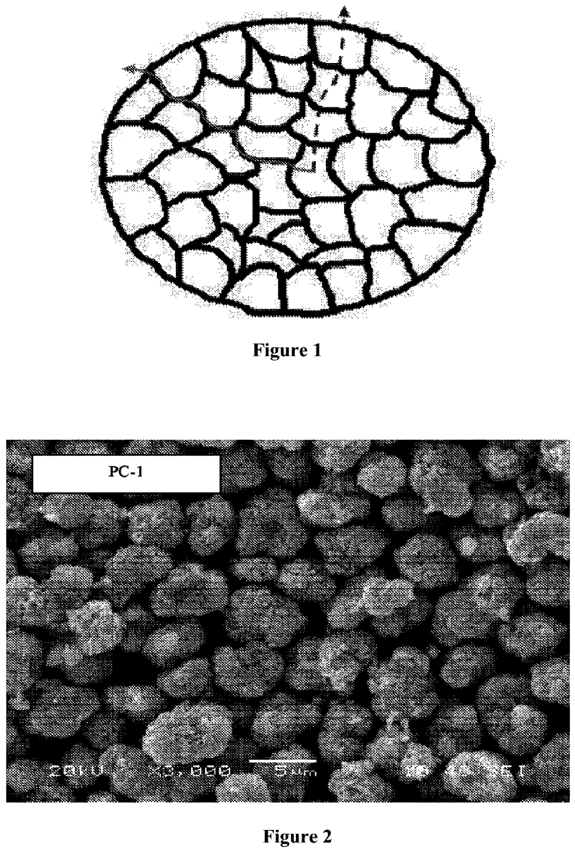

The above-mentioned technical solution of the present invention is based on the following principles: firstly, the cobalt oxide impregnated with the hydroxide of M' is used as a raw material. In the sintering process of synthesizing a high-rate lithium cobaltate positive electrode material, since the ionic radius of M' is much larger than that of Co , it is not easy to be dissolved into the crystal structure of the lithium cobaltate, but it reacts with the lithium ions to form a Li_{α}M'_{γ}O_{β} phase of a multi-channel network structure. Primary particles of the lithium cobaltate are embedded in the multi-channel network structure of the fast ionic conductor and melted with it together to form secondary particles (see Figure 1). The phase of the fast ionic conductor Li_{α}M'_{γ}O_{β} of the multi-channel network structure forms a multidimensional lithium ion transport channel. During the charging process, the lithium ions are separated from the bulk phase, diffuse through the channel into the surfaces of the particles, pass through the conductive agent and, finally, diffuse into the electrolyte. During the discharge process, the lithium ions diffuse from the electrolyte into the surfaces of the secondary particles, are transported to the surfaces of the primary particles through the fast ion transport channel of the multi-channel network structure of the particles and, finally, enter the lithium cobaltate bulk phase. It can be seen that the characteristics of specific raw materials selected to be used in the present invention determine the characteristics of the finally obtained lithium cobaltate positive electrode material and also determine its high rate performance. As a further improvement, the present invention in particular provides an embodiment in which the above-mentioned raw materials can be prepared using a porous cobalt oxide and an organic compound containing M'. The organic compound containing M' is sufficiently dissolved in absolute ethyl alcohol, and after an aqueous alcohol solution is added, the water promotes the hydrolysis of the metal organic compound to form a hydroxide of M' which sufficiently and uniformly fills the gaps and micropores inside the particles of the porous cobalt oxide and forms a continuous film on the surfaces of the particles of the impregnated cobalt oxide. As a further improvement, the present invention also provides a method for preparing a porous cobalt oxide, wherein a loose porous cobalt oxide material is prepared under specific process conditions for subsequent hydrolysis, impregnation, and continuous film formation.

In the prior art, an additive containing M', in most cases, is added in the step of synthesis of a lithium cobaltate, but since the ionic radius of M' is much larger than that of Co³⁺, it is not easy to be dissolved into the crystal structure of the lithium cobaltate, and it is enriched on the surfaces of the particles to form a film of fast ion conductor. Compared with the prior art, the advantage of the present invention is that the present invention provides a method for impregnating a porous cobalt oxide, wherein a lithium cobaltate is synthesized by using a porous cobalt oxide as cobalt source; the particles of the lithium cobaltate contain Li_{α}M'_{γ}O_{β} phase of a multi-channel network structure; during the charging and discharging process of the lithium-ion battery, this phase can be used as a fast channel for transporting lithium ions so that the lithium ion conductivity of the lithium cobaltate positive electrode material is greatly promoted, and the rate performance of the material is improved.

### Description of Drawings

In order to more clearly illustrate the embodiments of the present invention or the technical solutions in the prior art, the drawings referenced in the description of the embodiments or the prior art will be briefly described below. It is obvious that the drawings in the following description are some embodiments of the present invention, and those skilled in the art can obtain other drawings based on these drawings without any creative work.
Figure 1 is a schematic view of a path formed by particles of lithium cobaltate for transporting lithium ions in the charging process in the present invention, wherein the discharge process is reversed.
Figure 2 is a SEM photograph of a porous cobalt oxide before impregnation according to Embodiment 1 of the present invention.
Figure 3 is a SEM photograph of the porous cobalt oxide after the impregnation according to Embodiment 1 of the present invention.
Figure 4 is a SEM photograph of a lithium cobaltate positive electrode material LCO-1 according to Embodiment 1 of the present invention.

### Detailed Description

In order to make the present invention more easily understood, the present invention will be described more fully and detailed hereinafter in combination with the drawings and the preferred embodiments, but the scope of protection of the present invention is not limited to the specific embodiments below.

Unless otherwise specified, all technical terms used herein have the same meaning as commonly understood by those skilled in the art. The terminology used herein is only for describing specific embodiments and not intended to limit the scope of protection of the present invention.

Unless otherwise specified, all kinds of raw materials, reagents, instruments, equipment, etc. used in the present invention can be purchased commercially or prepared by existing methods.

### Embodiment 1:

A high-rate lithium cobaltate positive electrode material mainly consists of lithium cobaltate, wherein the lithium cobaltate positive electrode material contains a multi-channel network structure formed by a fast ionic conductor Li₂TiO₃, and the lithium cobaltate in form of primary particles is melted integrally with the fast ionic conductor Li₂TiO₃ to form secondary particles; the lithium cobaltate is embedded in the above-mentioned multi-channel network structure formed by the fast ionic conductor Li₂TiO₃. The chemical formula of the lithium cobaltate positive electrode material of this embodiment can be represented as Li_{0.99}CoO₂•0.005Li₂TiO₃, and it has a layered structure.

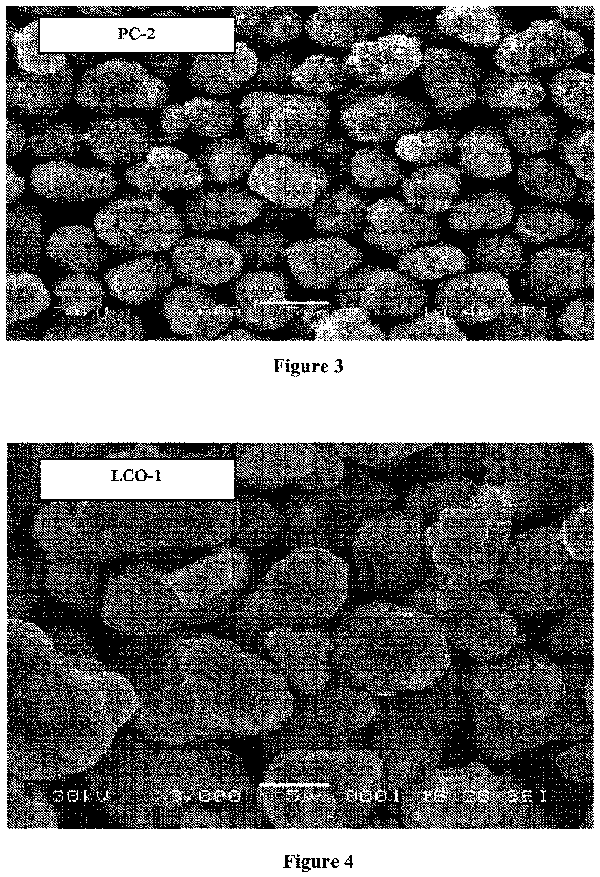

The method for preparing high-rate lithium cobaltate positive electrode material of this embodiment includes the following steps in which:
(1) a CoCl₂ solution is prepared, wherein the concentration of Co²⁺ in the solution is 110 g/L; a concentrated ammonium water and a distilled water are used to obtain a solution of complexing agent and ammonium water at a volume ratio of 1:10; a sodium bicarbonate solution of 1.2 mol/L is used as the precipitant solution;
(2) the precipitant solution in an amount of 1/3 is injected into a 25 L reaction kettle, wherein the pH of the solution is controlled to be 6.0-8.0; under intense stirring and inert gas shielding, the above-mentioned CoCl₂ solution, ammonium water solution and sodium bicarbonate solution are continuously and simultaneously injected into the reaction kettle using parallel flow method and react with each other; the pH is controlled to be 6.0-8.0 during the stirring reaction, and the temperature of the reaction kettle is controlled to be between 70 °C and 80 °C; after the CoCl₂ solution is injected completely, the mixture is aged for 4-8 hours and then filtered to obtain a filter cake;
(3) the filter cake obtained in the above-mentioned step (2) is dried in an oven at 120 °C for 3 hours to obtain a cobalt carbonate (with the particle size of 5.5 µm);
(4) the cobalt carbonate obtained in the above-mentioned step (3) is pre-sintered at 400 °C for 3 hours and then sintered at 750 °C for 3 hours to obtain a porous cobalt oxide (with the particle size of 5.0 µm) numbered as PC-1 (see Figure 2), with the average pore size being 100 nm and the porosity being 0.5%;
(5) 42 g of butyl titanate solution is dissolved in 500 g of absolute ethyl alcohol and stirred for 0.5 hour; under intense stirring in a disperser, the solution is added with 3000 g of the porous cobalt oxide PC-1 obtained in the step (4), and stirred for 0.5 hour; then it is added with an ethanol aqueous solution, the volume ratio of ethanol to water being 6, continuously stirred for 3 hours and then subjected to suction filtration; the filter cake is dried in an oven to obtain a cobalt oxide impregnated with Ti (OH)₄, the cobalt oxide being numbered as PC-2 (see Fig 3);
(6) 920 g of lithium carbonate and 2000 g of the cobalt oxide PC-2 obtained in the above-mentioned step (5) are dry-mixed uniformly to obtain a mixture;
(7) the mixture obtained in the above-mentioned step (6) is sintered in an air atmosphere furnace, the temperature of the sintering being 950 °C and the duration of the sintering being 10 hours; after the cooling, it is ground with a universal grinder for 20 s, the particle size being controlled to be 5.5-6.0 µm, to obtain a high-rate lithium cobaltate positive electrode material (numbered as LCO-1, see Fig 4).

### Embodiment 2:

A high-rate lithium cobaltate positive electrode material mainly consists of lithium cobaltate, wherein the lithium cobaltate positive electrode material contains a multi-channel network structure formed by a fast ionic conductor Li₂TiO₃, and the lithium cobaltate in form of primary particles is melted integrally with the fast ionic conductor Li₂TiO₃ to form secondary particles; the lithium cobaltate is embedded in the above-mentioned multi-channel network structure formed by the fast ionic conductor Li₂TiO₃. The chemical formula of the lithium cobaltate positive electrode material of this embodiment can be represented as Li_{1.00}Co_{0.99}Mg_{0.005}Al_{0.005}O₂•0.005Li_{0.005}TiO_{0.005}, and it has a layered structure.

The method for preparing high-rate lithium cobaltate positive electrode material of this embodiment includes the following steps in which:
(1)-(5): the steps (1)-(5) of this embodiment are the same as those of the embodiment 1;
(6) 936 g of lithium carbonate, 2000 g of the cobalt oxide PC-2 obtained in the above-mentioned embodiment 1, 5 g of magnesium oxide and 6.5 g of aluminium oxide are dry-mixed uniformly to obtain a mixture;
(7) the mixture obtained in the above-mentioned step (6) is sintered in an air atmosphere furnace, the temperature of the sintering being 1000 °C and the duration of the sintering being 10 hours; after the cooling, it is ground with a universal grinder for 20 s, the particle size being controlled to be 5.5-6.0 µm, to obtain a high-rate lithium cobaltate positive electrode material (numbered as LCO-2).

### Comparative Example 1:

A lithium cobaltate positive electrode material with a chemical formula of Li_{0.99}CoO₂•0.005Li₂TiO₃ has a layered structure, wherein the existing form of Li₂TiO₃ is mainly enriched on the surfaces of the particles, and the method for preparing lithium cobaltate positive electrode material of this comparative example in particular includes the following steps in which:
(1) 920 g of lithium carbonate, 2000 g of the PC-1 (synthesized in the embodiment 1) and 10 g of titanium dioxide are dry-mixed uniformly to obtain a mixture;
(2) the mixture obtained in the above-mentioned step (1) is sintered in an air atmosphere furnace, the temperature of the sintering being 950 °C and the duration of the sintering being 10 hours; after the cooling, it is ground with a universal grinder for 20 s, the particle size being controlled to be 5.5-6.0 µm, to obtain a lithium cobaltate positive electrode material (numbered as LCO-0).

### Embodiment 3:

A high-rate lithium cobaltate positive electrode material mainly consists of lithium cobaltate, wherein the lithium cobaltate positive electrode material contains a multi-channel network structure formed by a fast ionic conductor LiNbO₃, and the lithium cobaltate in form of primary particles is melted integrally with the fast ionic conductor LiNbO₃ to form secondary particles; the lithium cobaltate is embedded in the above-mentioned multi-channel network structure formed by the fast ionic conductor LiNbO₃. The chemical formula of the lithium cobaltate positive electrode material of this embodiment can be represented as Li_{1.01}CoO₂•0.01LiNbO₃, and it has a layered structure.

The method for preparing high-rate lithium cobaltate positive electrode material of this embodiment includes the following steps in which:
(1) a CoSO₄ solution is prepared, wherein the concentration of Co²⁺ in the solution is 150 g/L; a concentrated ammonium water and a distilled water are used to obtain a solution of complexing agent at a volume ratio of 1:10; an ammonium oxalate solution of 1.5 mol/L is used as the precipitant solution;
(2) the precipitant solution in an amount of 1/3 is injected into a 25 L reaction kettle; under intense stirring and inert gas shielding, the above-mentioned CoSO₄ solution, ammonium water and ammonium oxalate solution are continuously and simultaneously injected into the reaction kettle using parallel flow method and react with each other; the pH is controlled to be 6.0-7.0 during the stirring reaction, and the temperature of the reaction kettle is controlled to be 25 °C during the reaction; after the CoSO₄ solution is injected completely, the mixture is aged for 4-8 hours and then filtered to obtain a filter cake;
(3) the filter cake obtained in the above-mentioned step (2) is dried in an oven at 120 °C for 3 hours to obtain a cobalt oxalate (with the particle size of 7.5 µm);
(4) the cobalt oxalate obtained in the above-mentioned step (3) is sintered at 300 °C for 2 hours and then sintered at 700 °C for 5 hours to obtain a porous cobalt oxide (with the particle size of 6.5 µm) numbered as PC-3, with the average pore size being 500 nm and the porosity being 5%;
(5) 120 g of niobium ethoxide is dissolved in 2000g of absolute ethyl alcohol and stirred for 0.5 hour; under intense stirring in a disperser, the solution is added with 3000 g of the porous cobalt oxide PC-1 obtained in the step (4), and stirred for 1.0 hour; then it is added with an ethanol aqueous solution, the volume ratio of ethanol to water being 20, continuously stirred for 5 hours and then subjected to suction filtration; the filter cake is dried in an oven to obtain a cobalt oxide impregnated with Nb (OH)₅, the cobalt oxide being numbered as PC-4;
(6) 938 g of lithium carbonate and 2000 g of the cobalt oxide PC-4 obtained in the above-mentioned step (5) are dry-mixed uniformly to obtain a mixture;
(7) the mixture obtained in the above-mentioned step (6) is sintered in an air atmosphere furnace, the temperature of the sintering being 900 °C and the duration of the sintering being 10 hours; after the cooling, it is ground with a universal grinder for 20 s, the particle size being controlled to be 6.5-7.0 µm, to obtain a high-rate lithium cobaltate positive electrode material numbered as LCO-3.

### Embodiment 4:

A high-rate lithium cobaltate positive electrode material mainly consists of lithium cobaltate, wherein the lithium cobaltate positive electrode material contains a multi-channel network structure formed by a fast ionic conductor Li₂WO₄, and the lithium cobaltate in form of primary particles is melted integrally with the fast ionic conductor Li₂WO₄ to form secondary particles; the lithium cobaltate is embedded in the above-mentioned multi-channel network structure formed by the fast ionic conductor Li₂WO₄. The chemical formula of the lithium cobaltate positive electrode material of this embodiment can be represented as Li_{1.00}CoO₂•0.008Li₂WO₄, and it has a layered structure.

The method for preparing high-rate lithium cobaltate positive electrode material of this embodiment includes the following steps in which:
(1) a Co(NO₃)₂ solution is prepared, wherein the concentration of Co²⁺ in the solution is 100 g/L; a concentrated ammonium water and a distilled water are used to obtain a solution of complexing agent at a volume ratio of 1:10; an ammonium oxalate solution of 1.5 mol/L is used as the precipitant solution;
(2) the precipitant solution in an amount of 1/3 is injected into a 25 L reaction kettle; under intense stirring and inert gas shielding, the above-mentioned Co(NO₃)₂ solution, ammonium water and ammonium oxalate solution are continuously and simultaneously injected into the reaction kettle using parallel flow method and react with each other; the pH is controlled to be 6.0-7.0 during the stirring reaction, and the temperature of the reaction kettle is controlled to be 25 °C during the reaction; after the Co(NO₃)₂ solution is injected completely, the mixture is aged for 4-8 hours and then filtered to obtain a filter cake;
(3) the filter cake obtained in the above-mentioned step (2) is dried in an oven at 120 °C for 3 hours to obtain a cobalt oxalate (with the particle size of 7.0 µm);
(4) the cobalt oxalate obtained in the above-mentioned step (3) is sintered at 500 °C for 3 hours and then sintered at 800 °C for 5 hours to obtain a porous cobalt oxide (with the particle size of 6.5 µm) numbered as PC-5, with the pore size being 200 nm and the porosity being 1%;
(5) 135 g of tungsten ethoxide is dissolved in 2500g of absolute ethyl alcohol and stirred for 0.5 hour; under intense stirring in a disperser, the solution is added with 3000 g of the porous cobalt oxide PC-5 obtained in the step (4), and stirred for 1.5 hours; then it is added with an ethanol aqueous solution, the volume ratio of ethanol to water being 15, continuously stirred for 4 hours and then subjected to suction filtration; the filter cake is dried in an oven to obtain a cobalt oxide impregnated with W (OH)₆, the cobalt oxide being numbered as PC-6;
(6) 928 g of lithium carbonate and 2000 g of the cobalt oxide PC-6 obtained in the above-mentioned step (5) are dry-mixed uniformly to obtain a mixture;
(7) the mixture obtained in the above-mentioned step (6) is sintered in an air atmosphere furnace, the temperature of the sintering being 1000 °C and the duration of the sintering being 10 hours; after the cooling, it is ground with a universal grinder for 20 s, the particle size being controlled to be 6.5-7.0 µm, to obtain a high-rate lithium cobaltate positive electrode material numbered as LCO-4.

The electrochemical properties of the 5 products obtained in the above-mentioned embodiments 1, 2, 3, 4 and the comparative example 1 are tested, and the test methods are described below.

Assembling of a 063048 type square battery: the active material, PVDF, and conductive carbon black are mixed at a mass ratio of 95.4: 2.5: 2.1, then NMP is added, and the mixture is stirred to obtain a slurry. The slurry is applied onto an aluminium foil and dried at 120 °C to obtain a positive electrode plate which is assembled with a negative electrode plate, a separator, an electrolyte, etc. into a 063048 type battery. The charge and discharge performance of the battery is tested at room temperature, wherein the battery is charged with a constant current first and then with a constant voltage. When the charge cut-off voltage is 4.2 V or 4.35 V, a constant current discharge is used; when the cut-off voltage is 3.0 V, the charging current density is 0.5C, and the discharging current density is 0.2C/1C/10C/20C/50C.

Table 1 shows the rate performance of the LCO-0/1/2/3/4 tested at different voltages.

**Table 1: the rate performance of the LCO-0/1/2/3/4 tested at different voltages.**

| Number | Test items | 3.0-4.2 V | | | | | 3.0-4.35 V | | | | |
|---|---|---|---|---|---|---|---|---|---|---|---|
| | | 0.2C | 1C | 10C | 20C | 50C | 0.2C | 1C | 10C | 20C | 50C |
| Embodiment 1 LCO-1 | Rate retention (%) | 100 | 99.9 | 98.5 | 96.7 | 88.6 | 100 | 95.6 | 90.1 | 83.6 | 72.2 |
| | Plateau (V) | 3.805 | 3.774 | 3.716 | 3.585 | 3.471 | 3.842 | 3.795 | 3.742 | 3.648 | 3.498 |
| Embodiment 2 LCO-2 | Rate retention (%) | 100 | 99.7 | 97.3 | 94.3 | 87.2 | 100 | 97.6 | 92.3 | 87.2 | 85.7 |
| | Plateau (V) | 3.795 | 3.764 | 3.700 | 3.564 | 3.442 | 3.821 | 3.776 | 3.724 | 3.619 | 3.497 |
| Comparative example LCO-0 | Rate retention (%) | 100 | 99.6 | 95.5 | 84.7 | 75.1 | 100 | 94.1 | 85.5 | 64.7 | 45.1 |
| | Plateau (V) | 3.791 | 3.752 | 3.685 | 3.544 | 3.427 | 3.804 | 3.751 | 3.642 | 3.511 | 3.409 |
| Embodiment 3 LCO-3 | Rate retention (%) | 100 | 99.9 | 98.5 | 97.7 | 91.2 | 100 | 94.5 | 86.5 | 64.0 | 55.1 |
| | Plateau (V) | 3.875 | 3.868 | 3.756 | 3.685 | 3.651 | 3.884 | 3.761 | 3.655 | 3.511 | 3.509 |
| Embodiment 4 LCO-4 | Rate retention (%) | 100 | 99.9 | 98.5 | 97.0 | 89.6 | 100 | 94.9 | 87.2 | 64.7 | 65.1 |
| | Plateau (V) | 3.860 | 3.853 | 3.716 | 3.625 | 3.571 | 3.870 | 3.765 | 3.664 | 3.521 | 3.519 |

Figure 1 shows a schematic view of lithium ion transportation during charging of lithium cobaltate particles according to the present invention. The solid line represents a path for transporting lithium ions in the particles of a positive electrode material prepared according to the embodiments of the present invention, and the dotted line represents a path for transporting lithium ions in the particles of a positive electrode material according to the comparative example. In the process of impregnating the porous cobalt oxide with a butyl titanate, the butyl titanate is hydrolysed to form a Ti(OH)₄ which fills the gaps and micropores inside the particles of the porous cobalt oxide and forms a continuous film on the surfaces of the impregnated particles. During the sintering to synthesize a lithium cobaltate, the ionic radius of Ti⁴⁺ is much larger than that of Co³⁺, and it is not easy to be dissolved into the crystal structure of the lithium cobaltate, but it reacts with the lithium ions to form a Li₂TiO₃ phase of a multi-channel network structure. Primary particles of the lithium cobaltate are embedded in the multi-channel network structure of the fast ionic conductor and melted with it together to form secondary particles.

As can be seen from Table 1 above, when the LCO-1/2/3/4 prepared using the cobalt oxide impregnated with butyl titanate are tested at 4.2 V, their capacity retention rate and plateau at 50C rate are both significantly higher than those in the comparative example LCO-0. This indicates that the provided fast ionic conductor forming the multi-channel network structure of the LCO-1/2/3/4 greatly increases the lithium ion transmission rate and also effectively increases the discharge capacity and plateau of the material. When the LCO-2 is tested at 4.35 V, its capacity retention rate and plateau at 50C rate are significantly higher than those of the LCO-1, LCO-3, and LCO-4 in the embodiments. This is caused by the fact that doping the material exposed to 4.35 V high voltage with Mg and Al can effectively improve the structural stability of the material, and thus the rate performance at high voltage is excellent.

## Claims

1. A method for preparing high-rate lithium cobaltate positive electrode material, **characterized in that** the lithium cobaltate positive electrode material is prepared by uniformly mixing a cobalt oxide impregnated with a hydroxide of M', with M' being one or more of Ti, Nb or W, with a lithium source and then sintering the mixture in an air atmosphere furnace at a high temperature; the sintering is sintering performed at a temperature between 850 °C and 1000 °C for 6-20 hours;
the cobalt oxide impregnated with a hydroxide of M' is prepared using the following steps in which:an organic compound containing M' is dissolved in absolute ethyl alcohol, wherein it is dissolved and dispersed using a disperser; after the complete and uniform stirring, the solution is added with a porous cobalt oxide and stirred for 0.5-1.5 hours; then, it is added with an ethanol aqueous solution, with the volume ratio of ethanol to water being 5-20, continuously stirred for 2-5 hours, subjected to suction filtration and dried to obtain the cobalt oxide impregnated with a hydroxide of M'.

2. The method for preparing high-rate lithium cobaltate positive electrode material according to Claim 1, **characterized in that** the organic compound containing M' is one or more of alkoxide of M', alkyl compound of M', carbonyl compound of M', and carboxyl compound of M'; the porous cobalt oxide is prepared by pre-sintering a precursor, the precursor being CoCO₃·aH₂O or CoC₂O₄·aH₂O, wherein 0≤a≤9; the average pore size distribution of the porous cobalt oxide is between 100 nm and 500 nm, and the porosity is between 0.5% and 5%.

3. The method for preparing high-rate lithium cobaltate positive electrode material according to Claim 2, **characterized in that** the porous cobalt oxide is prepared using the following steps in which:
a small amount of a precipitant solution is injected into a reaction kettle, wherein the pH is 6-14; under intense stirring and inert gas shielding, a cobalt salt solution, a complexing agent solution and the remaining precipitant solution are simultaneously injected into the reaction kettle using parallel flow method and react with each other; the pH is continuously controlled to be 6-14 during the stirring reaction, and the temperature of the reaction kettle is controlled to be between 0 °C and 85 °C during the reaction; after the cobalt salt solution is added completely, the mixture is aged and filtered to obtain a filter cake which is then dried to obtain a precursor; the precursor is placed into an air atmosphere furnace for pre-sintering, and it is sieved after the sintering to obtain the porous cobalt oxide.

4. The method for preparing high-rate lithium cobaltate positive electrode material according to Claim 3, **characterized in that** the cobalt salt solution is a solution formed by dissolving at least one of CoCl₂·bH₂O, CoSO₄·bH₂O, Co(NO₃)₂·bH₂O in water, wherein 0≤b≤6; the concentration of Co²⁺ in the cobalt salt solution is controlled to be 70-200 g/L; the complexing agent solution is ammonia water or aminocarboxylate solution; and the precipitant solution is carbonate solution, oxalic acid or oxalate solution.

5. The method for preparing high-rate lithium cobaltate positive electrode material according to Claim 3, **characterized in that** the ageing time is 4-8 hours, and the heating mechanism of the pre-sintering is as follows: sintering at 300 °C-500 °C for 2-5 hours, and then sintering at 700 °C-800 °C for 2-5 hours.

6. The method for preparing high-rate lithium cobaltate positive electrode material according to any of Claims 1 to 4, **characterized in that** the lithium source is one or more of lithium carbonate, lithium hydroxide or lithium oxide; an additive containing a doping element M is further mixed in the raw material, wherein the additive is at least one of oxide, hydroxide, carboxy oxide, carbonate or basic carbonate of M, with M being one or more of Mg, Al, Si, Sc, Ni, Mn, Ga and Ge.

7. A high-rate lithium cobaltate positive electrode material prepared by the method according to claim 1, which is composed of lithium cobaltate, **characterized in that** the lithium cobaltate positive electrode material contains a multi-channel network structure formed by a fast ionic conductor Li_{α}M'_{γ}O_{β}; the lithium cobaltate in form of primary particles is melted integrally with the fast ionic conductor Li_{α}M'_{γ}O_{β} to form secondary particles; and the lithium cobaltate is embedded in said multi-channel network structure formed by the fast ionic conductor Li_{α}M'_{γ}O_{β}, wherein the element M' in the Li_{α}M'_{γ}O_{β} is one or more of Ti, Nb, or W, and 1≤α≤4, 1≤γ≤5, 2≤β≤12.

8. The high-rate lithium cobaltate positive electrode material according to Claim 7, **characterized in that** the lithium cobaltate positive electrode material contains a doping element M, and the lithium cobaltate positive electrode material is represented by a chemical formula of Li_{1+y}Co₁₋ₓMₓO₂•zLi_{α}M'_{γ}O_{β}, wherein 0≤x≤0.1, -0.01≤y≤0.01, 0.005≤z≤0.01, and the element M is one or more of Mg, Al, Si, Sc, Ni, Mn, Ga, and Ge.

## Patentansprüche

1. Verfahren zur Herstellung eines hochratigen Lithiumcobaltat-Positivelektrodenmaterials, **dadurch gekennzeichnet, dass** das Lithiumcobaltat-Positivelektrodenmaterial durch gleichmäßiges Mischen eines mit einem Hydroxid von M' imprägnierten Cobaltoxids, wobei M' eines oder mehrere von Ti, Nb oder W ist, mit einer Lithiumquelle und anschließendes Sintern der Mischung in einem Ofen mit Luftatmosphäre bei einer hohen Temperatur hergestellt wird; wobei das Sintern ein Sintern ist, das bei einer Temperatur zwischen 850°C und 1000°C für 6-20 Stunden durchgeführt wird;
wobei das mit einem Hydroxid von M' imprägnierte Cobaltoxid unter Verwendung der folgenden Schritte hergestellt wird, in denen: eine M' enthaltende organische Verbindung in absolutem Ethylalkohol gelöst wird, wobei sie unter Verwendung eines Dispergierers gelöst und dispergiert wird; ein poröses Cobaltoxid nach dem vollständigen und gleichmäßigen Rühren zu der Lösung zugegeben und für 0,5-1,5 Stunden gerührt wird; dann eine wässrige Ethanollösung dazu zugegeben wird, wobei das Volumenverhältnis von Ethanol zu Wasser 5-20 beträgt, und es kontinuierlich für 2-5 Stunden gerührt, einer Saugfiltration unterzogen und getrocknet wird, um das mit einem Hydroxid von M' imprägnierte Cobaltoxid zu erhalten.

2. Verfahren zur Herstellung eines hochratigen Lithiumcobaltat-Positivelektrodenmaterials nach Anspruch 1, **dadurch gekennzeichnet, dass** die M' enthaltende organische Verbindung eines oder mehrere von Alkoxid von M', Alkylverbindung von M', Carbonylverbindung von M' und Carboxylverbindung von M' ist; das poröse Cobaltoxid durch Vorsintern eines Präkursors hergestellt wird, wobei der Präkursor CoCO₃ · aH₂O oder CoC₂O₄ · aH₂O mit 0 ≤ a ≤ 9 ist; wobei die durchschnittliche Porengrößenverteilung des porösen Cobaltoxids zwischen 100 nm und 500 nm liegt, und die Porosität zwischen 0,5% und 5% liegt.

3. Verfahren zur Herstellung eines hochratigen Lithiumcobaltat-Positivelektrodenmaterials nach Anspruch 2, **dadurch gekennzeichnet, dass** das poröse Cobaltoxid unter Verwendung der folgenden Schritte hergestellt wird, in denen: eine kleine Menge einer Fällungsmittellösung in einen Reaktionskessel injiziert wird, wobei der pH-Wert 6-14 beträgt; unter intensivem Rühren und Inertgasabschirmung eine Cobaltsalzlösung, eine Komplexbildnerlösung und die restliche Fällungsmittellösung gleichzeitig in den Reaktionskessel unter Verwendung eines Parallelflussverfahrens injiziert werden, und sie miteinander reagieren;
der pH-Wert während der Rührreaktion kontinuierlich auf 6-14 geregelt wird, und die Temperatur des Reaktionskessels während der Reaktion auf zwischen 0°C und 85°C geregelt wird; die Mischung nach der vollständigen Zugabe der Cobaltsalzlösung gealtert und filtriert wird, um einen Filterkuchen zu erhalten, der dann getrocknet wird, um einen Präkursor zu erhalten; der Präkursor zum Vorsintern in einen Ofen mit Luftatmosphäre zugegeben und nach dem Sintern gesiebt wird, um das poröse Cobaltoxid zu erhalten.

4. Verfahren zur Herstellung eines hochratigen Lithiumcobaltat-Positivelektrodenmaterials nach Anspruch 3, **dadurch gekennzeichnet, dass** die Cobaltsalzlösung eine Lösung ist, die durch Auflösen von mindestens einem von CoCl₂ · bH₂O, CoSO₄ · bH₂O, Co(NO₃)₂ · bH₂O mit 0≤ b ≤ 6 in Wasser gebildet ist; die Konzentration von Co²⁺ in der Cobaltsalzlösung auf 70-200 g/l geregelt wird; wobei die Komplexbildnerlösung Ammoniakwasser oder Aminocarboxylatlösung ist; und die Fällungsmittellösung Carbonatlösung, Oxalsäure oder Oxalatlösung ist.

5. Verfahren zur Herstellung eines hochratigen Lithiumcobaltat-Positivelektrodenmaterials nach Anspruch 3, **dadurch gekennzeichnet, dass** die Alterungszeit 4-8 Stunden beträgt, und der Erwärmungsmechanismus des Vorsinterns wie folgt ist: Sintern bei 300°C-500°C für 2-5 Stunden und dann Sintern bei 700°C-800°C für 2-5 Stunden.

6. Verfahren zur Herstellung eines hochratigen Lithiumcobaltat-Positivelektrodenmaterials nach einem der Ansprüche 1 bis 4, **dadurch gekennzeichnet, dass** die Lithiumquelle eines oder mehrere von Lithiumcarbonat, Lithiumhydroxid oder Lithiumoxid ist; ein Additiv, das ein Dotierelement M enthält, weiter in das Rohmaterial gemischt wird, wobei das Additiv mindestens eines von Oxid, Hydroxid, Carboxyoxid, Carbonat oder basischem Carbonat von M ist, wobei M eines oder mehrere von Mg, Al, Si, Sc, Ni, Mn, Ga und Ge ist.

7. Hochratiges Lithiumcobaltat-Positivelektrodenmaterial, hergestellt durch das Verfahren nach Anspruch 1, das aus Lithiumcobaltat zusammengesetzt ist, **dadurch gekennzeichnet, dass** das Lithiumcobaltat-Positivelektrodenmaterial eine mehrkanalige Netzwerkstruktur enthält, die durch einen schnellen Ionenleiter Li_{α}M'_{γ}O_{β} gebildet ist; wobei das Lithiumcobaltat in Form von Primärteilchen integral mit dem schnellen Ionenleiter Li_{α}M'_{γ}O_{β} geschmolzen wird, um Sekundärteilchen zu bilden; und das Lithiumcobaltat in die mehrkanalige Netzwerkstruktur eingebettet wird, die durch den schnellen Ionenleiter Li_{α}M'_{γ}O_{β} gebildet ist, wobei das Element M' in dem Li_{α}M'_{γ}O_{β} eines oder mehrere von Ti, Nb oder W mit 1≤ α ≤ 4, 1 ≤ γ ≤ 5, 1 ≤ β ≤ 12 ist.

8. Hochratiges Lithiumcobaltat-Positivelektrodenmaterial nach Anspruch 7, **dadurch gekennzeichnet, dass** das Lithiumcobaltat-Positivelektrodenmaterial ein Dotierungselement M enthält, und das Lithiumcobaltat-Positivelektrodenmaterial durch die chemische Formel Li_{1+y}Co₁₋ₓMₓO₂•zLi_{α}M'_{γ}O_{β} mit 0 ≤ x ≤ 0,1, - 0,01 ≤ y ≤ 0,01, 0,005 ≤ z ≤ 0,01 dargestellt wird, und das Element M eines oder mehrere von Mg, Al, Si, Sc, Ni, Mn, Ga und Ge ist.

## Revendications

1. Un procédé de préparation d'un matériau d'électrode positive au cobaltate de lithium à haut débit, **caractérisé en ce que** le matériau d'électrode positive au cobaltate de lithium est préparé en mélangeant uniformément un oxyde de cobalt imprégné d'un hydroxyde de M', avec M' étant un ou plusieurs parmi Ti, Nb ou W, avec une source de lithium, puis en frittant le mélange dans un four à atmosphère d'air à une température élevée; le frittage est un frittage effectué à une température comprise entre 850°C et 1000°C pendant 6 à 20 heures;
l'oxyde de cobalt imprégné d'un hydroxyde de M' est préparé en mettant en oeuvre les étapes suivantes dans lesquelles: on dissout un composé organique contenant M' dans l'alcool éthylique absolu, où on le dissout et on le disperse à l'aide d'un disperseur; après agitation complète et uniforme, on ajoute un oxyde de cobalt poreux à la solution et on agite pendant 0,5-1,5 heures; puis on ajoute une solution aqueuse d'éthanol, le rapport volumique de l'éthanol à l'eau étant de 5-20, on agite en continu pendant 2-5 heures, on soumet à une filtration par aspiration et on sèche pour obtenir l'oxyde de cobalt imprégné d'un hydroxyde de M'.

2. Le procédé de préparation d'un matériau d'électrode positive au cobaltate de lithium à haut débit selon la revendication 1, **caractérisé en ce que** le composé organique contenant M' est un ou plusieurs parmi un alcoxyde de M', un composé alkyle de M', un composé carbonyle de M' et un composé carboxyle de M'; l'oxyde de cobalt poreux est préparé par pré-frittage d'un précurseur, le précurseur étant CoCO₃ · aH₂O ou CoC₂O₄ · aH₂O, où 0 ≤ a ≤9; la distribution moyenne de la taille des pores de l'oxyde de cobalt poreux est comprise entre 100 nm et 500 nm, et la porosité est comprise entre 0,5 % et 5 %.

3. Le procédé de préparation d'un matériau d'électrode positive au cobaltate de lithium à haut débit selon la revendication 2, **caractérisé en ce que** l'oxyde de cobalt poreux est préparé en utilisant les étapes suivantes dans lesquelles: on injecte une petite quantité d'une solution de précipitant dans une bouilloire de réaction, dans laquelle le pH est de 6 à 14; sous agitation intense et protection contre les gaz inertes, on injecte simultanément dans la bouilloire de réaction une solution de sel de cobalt, une solution d'agent complexant et la solution de précipitant restante en utilisant un procédé à écoulement parallèle en vue de la réaction entre celles-ci;
le pH est régulé en continu de manière à être compris entre 6 et 14 pendant la réaction d'agitation, et la température de la bouilloire de réaction est régulée de manière à être comprise entre 0 °C et 85 °C pendant la réaction; après l'ajout complet de la solution de sel de cobalt, on vieillit et filtre le mélange pour obtenir un croûte de filtration qui est ensuite séché pour obtenir un précurseur; on place le précurseur dans un four à atmosphère d'air pour un pré-frittage, et on le tamise après le frittage pour obtenir l'oxyde de cobalt poreux.

4. Le procédé de préparation d'un matériau d'électrode positive au cobaltate de lithium à haut débit selon la revendication 3, **caractérisé en ce que** la solution de sel de cobalt est une solution formée par dissolution d'au moins l'un parmi CoCl₂ · bH₂O, CoSO₄ · bH₂O, Co(NO₃)₂ bH₂O dans de l'eau, où 0 ≤ b≤6; la concentration de Co²⁺ dans la solution de sel de cobalt est contrôlée pour être comprise entre 70 et 200 g/L; la solution d'agent complexant est une solution d'ammoniaque ou d'aminocarboxylate; et la solution de précipitant est une solution de carbonate, d'acide oxalique ou d'oxalate.

5. Le procédé de préparation d'un matériau d'électrode positive au cobaltate de lithium à haut débit selon la revendication 3, **caractérisé en ce que** le temps de vieillissement est de 4 à 8 heures, et le mécanisme de chauffage du pré-frittage est le suivant: frittage à 300°C-500°C pendant 2 à 5 heures, puis frittage à 700°C-800°C pendant 2 à 5 heures.

6. Le procédé de préparation d'un matériau d'électrode positive au cobaltate de lithium à haut débit selon l'une quelconque des revendications 1 à 4, **caractérisé en ce que** la source de lithium est un ou plusieurs parmi le carbonate de lithium, l'hydroxyde de lithium ou l'oxyde de lithium, un additif contenant un élément dopant M est en outre mélangé dans la matière première, dans lequel l'additif est au moins un parmi l'oxyde, l'hydroxyde, l'oxyde de carboxy, le carbonate ou le carbonate basique de M, avec M étant un ou plusieurs parmi Mg, Al, Si, Sc, Ni, Mn, Ga et Ge.

7. Un matériau d'électrode positive au cobaltate de lithium à haut débit préparé par le procédé selon la revendication 1, qui est composé de cobaltate de lithium, **caractérisé en ce que** le matériau d'électrode positive au cobaltate de lithium contient une structure de réseau multicanal formée par un conducteur ionique rapide Li_{α}M'_{γ}O_{β}; le cobaltate de lithium sous forme de particules primaires est fondu intégralement avec le conducteur ionique rapide Li_{α}M'_{γ}O_{β} pour former des particules secondaires; et le cobaltate de lithium est incorporé dans ladite structure de réseau multicanal formée par le conducteur ionique rapide Li_{α}M'_{γ}O_{β}, dans lequel l'élément M' dans le Li_{α}M'_{γ}O_{β} est un ou plusieurs parmi Ti, Nb ou W, et 1≤α≤4, 1≤γ≤5, 1≤β≤12.

8. Le matériau d'électrode positive au cobaltate de lithium à haut débit selon la revendication 7, **caractérisé en ce que** le matériau d'électrode positive au cobaltate de lithium contient un élément dopant M, et le matériau d'électrode positive au cobaltate de lithium est représenté par une formule chimique Li_{1+y}Co₁₋ₓMₓO₂ • zLi_{α}M'_{γ}O_{β}, dans laquelle 0≤x ≤ 0,1, -0,01 ≤ y ≤ 0,01, 0,005 ≤ z≤0,01, et l'élément M est un ou plusieurs éléments parmi Mg, Al, Si, Sc, Ni, Mn, Ga et Ge.
